# EUROPÄISCHE PATENTANMELDUNG

(11) **EP 0 926 054 A1**
(43) Veröffentlichungstag der Anmeldung: **30.06.1999**
(21) Anmeldenummer: 98124096.3
(22) Anmeldetag: 18.12.1998
(51) Int. Cl.: B62J 39/00

(54) **Verfahren und Vorrichtung zur Ermittlung der ergonomisch optimalen Einstellung eines Fahrrads**

(30) Priorität: 24.12.1997 DE 19757858
(71) Anmelder: Bisinger, Lothar, 72336 Balingen (DE)
(72) Erfinder: Bisinger, Lothar, 72336 Balingen (DE)

(57) **Zusammenfassung**

Verfahren zur Ermittlung und Einstellung der für den Sportler individuell optimalen Fahrradrahmengeometrie und Satteleinstellung durch Bestimmung des Kniegelenkwinkels oder der Kniegelenkposition in zwei festgelegten Pedalpositionen, sowie Vorrichtung zur Durchführung des Verfahrens.
Die Vorrichtung (20) umfaßt einen Satteladapter (24) zur Festlegung am Fahrradsattel (7) oder an der Sattelstütze (8), einen Pedaladapter (P) zur Festlegung am Fahrradpedal (6), sowie eine Oberschenkelstelleinrichtung (26), eine Unterschenkelstelleinrichtung (27), ein Fußmodell (28), ein Hüftgelenk (21), ein Kniegelenk (22) und ein Fußgelenk (23). Die Vorrichtung (20) umfaßt ferner Verstelleinrichtungen zur Einstellung der Position des Hüftgelenks (21) in Bezug auf den Sattelbefestigungspunkt, des Abstands vom Knie (22) - zum Hüftgelenk (21), des Abstands vom Kniegelenk (22) zum Fußgelenk (23), des Abstands vom Fußgelenk (23) zum Pedaladapter (P) und zur Einstellung des Fußgelenkwinkels.

## Beschreibung

Es ist bekannt, daß zur Erzielung einer maximalen Effizienz des Krafteinsatzes und zur Vermeidung von Über- und Fehl-Belastungen von Gelenken, Muskulatur und Wirbelsäule beim Fahrradfahren eine optimale Sitzposition in Bezug auf die Pedalanordnung von hoher Bedeutung ist.

Von maßangefertigten Rennrädern für Spitzensportler abgesehen, sind die variablen Einstellgrößen beim Fahrrad:
- Rahmenhöhe
- Rahmenlänge
- Lenkervorbau
- Sattelhöhe
Am fertigen Fahrrad ist nur die Sattelhöhe tatsächlich einstellbar. Sportliche Fahrräder sind aber in unterschiedlichen Rahmenhöhen und - längen, sowie mit unterschiedlichen Lenkervorbauten verfügbar, so daß eine ergonomisch optimale Auswahl dieser Größen bei der Kaufentscheidung möglich ist.

Die vorliegende Erfindung betrifft ein Verfahren und eine Vorrichtung zur Feststellung und Auswahl bzw. Einstellung der ergonomisch optimalen Rahmenhöhe, Rahmenlänge und Sitzhöhe.

Für die Auswahl der individuell richtigen Rahmenhöhe gibt es verschiedene Tabellen und Faustregeln, die im Fachhandel angewendet werden und die zu ähnlichen Ergebnissen führen. (Lindner, Wolfram, Erfolgreiches Radsporttraining: vom Amateur zum Profi, BLV, ISBN 3-405-14416-7, S.221).

Über diese einfachen Regeln hinaus gibt es aber noch weitere spezielle Einstellregeln, die überwiegend im Wettkampfsport angewandt werden und die Spezifika von Flach- und Bergstrecken, Sprint und Bahnrennen, Querfeldeinrennen, Rennrad- und Mountain-Bike-Sport berücksichtigen. Viele Wettkampfsportler haben außerdem die ihrer speziellen Anatomie optimal angepaßten Einstellregeln ermittelt.
Im Fachhandel und auch von vielen Anwendern wird eine Sattelhöheneinstellung vielfach nach einfachen Regeln vorgenommen, die biomechanischen Anforderungen nicht standhalten. So wird vielfach die Sattelhöhe so eingestellt, daß das Bein bei flachstehendem Fuß (Knöchelwinkel 90°) in tiefster Pedalstellung gerade gestreckt ist. Eine andere gebräuchliche Standardregel für die Sattelposition ist, daß der Fahrer aus bequemer Sitzposition mit den Zehen beider Füße gleichzeitig den Boden erreichen kann. Beide Standardregeln entsprechen nicht biomechanischen Erkenntnissen und haben zu hohe Sitzpositionen zur Folge.

Die biomechanisch korrekte Sattel- und Rahmeneinstellung ist insgesamt eine komplexe Aufgabe, die auch mit Hilfsmitteln wie Maßband, Winkelmesser, und Lot nur schwer präzise durchzuführen ist.

Die Parameter, die optimal einzustellen sind, sind die horizontale und die vertikale Komponente der Entfernung zwischen Sattel und Tretlager. Diese beiden Großen sind dann optimal ausgewählt beziehungsweise eingestellt, wenn die Messung der Beinpositionen in zwei deutlich voneinander abweichenden Pedalstellungen nach biomechanischen Grundsätzen korrekte Werte ergibt.

Eine wichtige Einstellregel, die für den Freizeitsportler, teilweise aber auch für den Wettkampfsportler nach aktuellen Erkenntnissen zu einer biomechanisch und ergonomisch korrekten Sitzeinstellung in Bezug auf die Pedalposition führt, wird durch Lindner (s.o.) beschrieben:
I. Bei horizontaler Lage der Tretkurbeln befindet sich die Krafteinleitung in das vordere Pedal (Ballenpunkt des Fußes bzw. Befestigungsbeschlag des Schuhs für die Pedalanbindung) in der Lotlinie, die von der Kniespitze aus angelegt wird. Die Stellung des Fußgelenks ist dabei so, daß das Pedal selbst um 5° nach vorne oben geneigt ansteigt. Radsportschuhe sind im Allgemeinen so konstruiert, daß sich die Fußsohle des Sportlers hierbei annährend in horizontaler Stellung befindet.
II. Wenn die Pedalkurbel in Verlängerung der Sattelstütze ausgerichtet ist, d.h. bei maximaler Streckung des Beines, beträgt der Kniewinkel (Winkel zwischen Ober- und Unterschenkel) 165° +5°/-0.

Die vorliegende Erfindung betrifft ein Verfahren und eine Vorrichtung, die eine rasche und präzise Prüfung der Fahrerposition nach der vorgenannten oder nach anderen Regeln ermöglicht.

Es ist zwar bekannt, im Rennsport Einstellrahmen zu verwenden, bei denen neben der Sattelstütze sämtliche Rohrlängen des Rahmens verstellt werden können, so daß die Maße für den individuellen Idealrahmen zur Auswahl eines optimalen Rahmens oder zur Vorgabe für einen maßgefertigten Rahmen eingestellt werden können. Aber auch dieser Einstellrahmen ersetzt nicht die vorherige Messung der Fahrerposition, sondern setzt diese voraus.

Die genaue Durchführung des erfindungsgemäßen Verfahrens und die Funktionsweise der Vorrichtung wird im folgenden an Hand der Figuren 1 bis 3 beschrieben.

Es zeigen:
- Figur 1:: Eine schematische Darstellung eines Fahrrades mit Fahrer in Seitenansicht mit Darstellung der für die Fahrerposition wesentlichen Parameter und Verstellmöglichkeiten
- Figur 2a:: Eine Darstellung in Seitenansicht der erfindungsgemäßen Vorrichtung in einer ersten Ausführungsform, angebracht an einem schematisch dargestellten Fahrrad in Meßposition nach der vorgenannten Regel II.
- Figur 2b:: Eine Darstellung in Frontansicht der selben erfindungsgemäßen Vorrichtung, angebracht an einem schematisch dargestellten Fahrrad in Meßposition nach der vorgenannten Regel II.
- Figur 3a:: Seitenansicht der erfindungsgemäßen Vorrichtung in einer zweiten Ausführungsform, angebracht an eine schematisch dargestellten Fahrrad in Meßposition nach der vorgenannten Regel I.
- Figur 3b:: Frontansicht der selben Vorrichtung wie in Figur 3a.

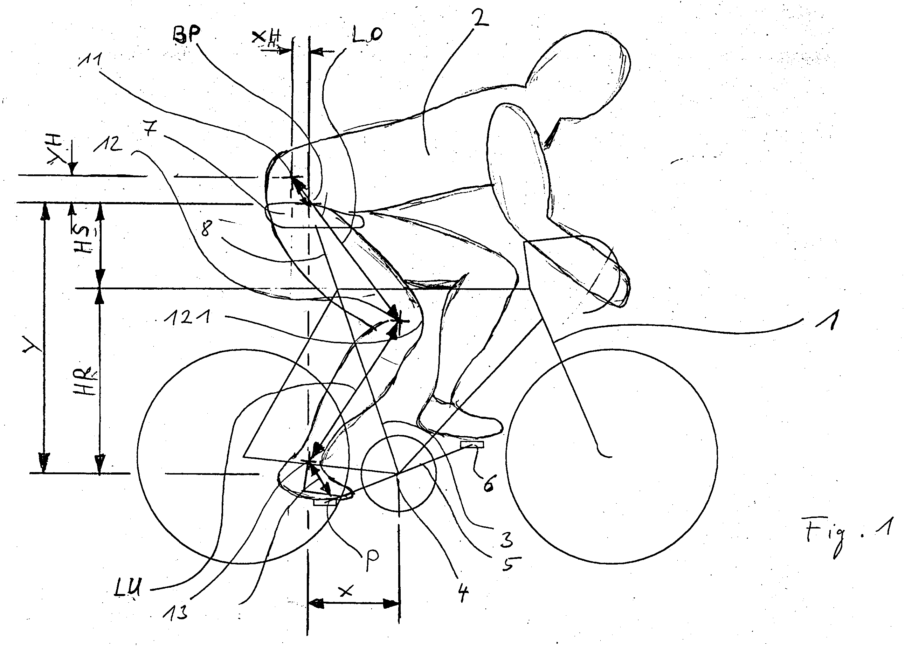

Figur 1 zeigt schematisch die Seitenansicht eines Fahrrads (1) mit Fahrer (2). Der Fahrer (2) ist, wie auch in allen übrigen Darstellungen, in transparenter Darstellung gezeichnet. (3) bezeichnet den Rahmen des Fahrrads, (4) das Tretlager, (5) die Pedalkurbel, (6) das Pedal, (7) den Sattel und (8) die Sattelstütze.

Die maßgeblichen Einstellmaße für die Optimierung der Sitzposition unter biomechanischen Aspekten sind die vertikale (Y) und horizontale (X) Entfernung des Sattels (7) vom Tretlager (4). Das vertikale Maß (Y) setzt sich zusammen aus der verstellbaren Sattelhöhe (HS) und der konstruktionsbedingt festen Rahmenhöhe (HR).

Angegeben sind auch die biomechanisch relevanten anatomischen Größen: Hüftgelenk (11), Kniegelenk (12) mit Kniespitze (121), Fußgelenk (13), sowie die Abstandsmaße (XH) und (YH) zur Festlegung der Position des Hüftgelenks in Relation zum Fahrradsattel, die Oberschenkellänge (LO) vom Hüft- zum Kniegelenk, die Unterschenkellänge (LU) vom Knie- zum Fußgelenk und die Fußlänge (LF) vom Fußgelenk zum Krafteinleitungspunkt (P) vom Fuß in das Pedal. Dieser Punkt wird im Weiteren als Position des Pedaladapters bezeichnet. Der Pedaladapter ist im Allgemeinen ein ausgedehntes Bauteil, das von unterschiedlichen Herstellern unterschiedlich gestaltet wird, doch wird in dieser Schrift unter Position des Pedaladapters (P) der eindeutig festlegbare eigentliche Kraftangriffspunkt verstanden.

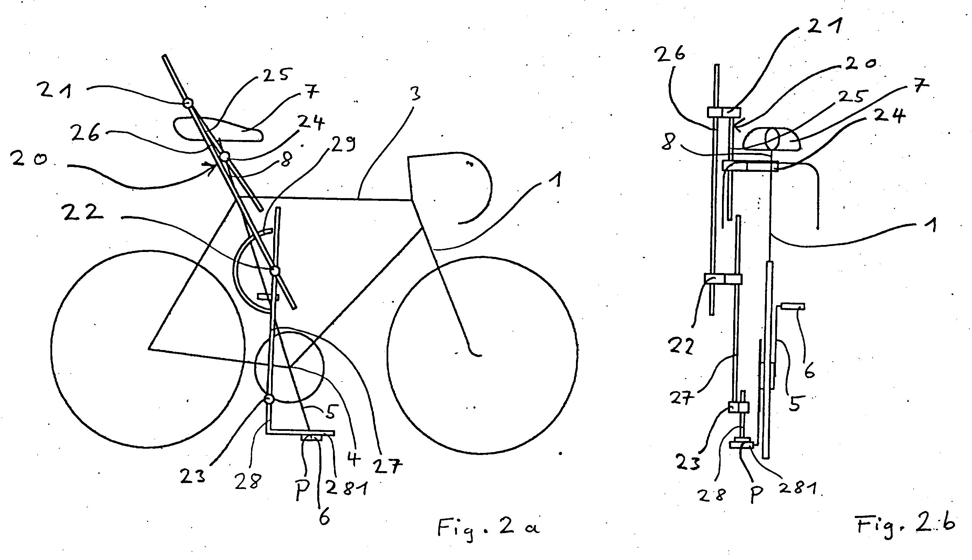

In Figur 2a ist das selbe Fahrrad (1) dargestellt, jedoch ist der Fahrer (2) ersetzt durch die erfindungsgemäße Vorrichtung (20). Diese Vorrichtung umfaßt ein Hüftgelenk (21), ein Kniegelenk (22), ein Fußgelenk (23), einen Satteladapter (24), eine Verstelleinrichtung (25) zur Einstellung der Position des Hüftgelenks in x- und in y-Richtung in Relation zum Fahrradsattel (7), eine Oberschenkelstelleinrichtung (26), eine Unterschenkelstelleinrichtung (27), ein Fußmodell (28) und zumindest eine Winkelmeßeinrichtung (29) zur Messung des Kniegelenkwinkels.

Vorzugsweise sind die Oberschenkelstelleinrichtung (26) und die Unterschenkelstelleinrichtung (27) Stangen, die an den jeweils angrenzenden Gelenken (21, 22, 23) angelenkt sind.

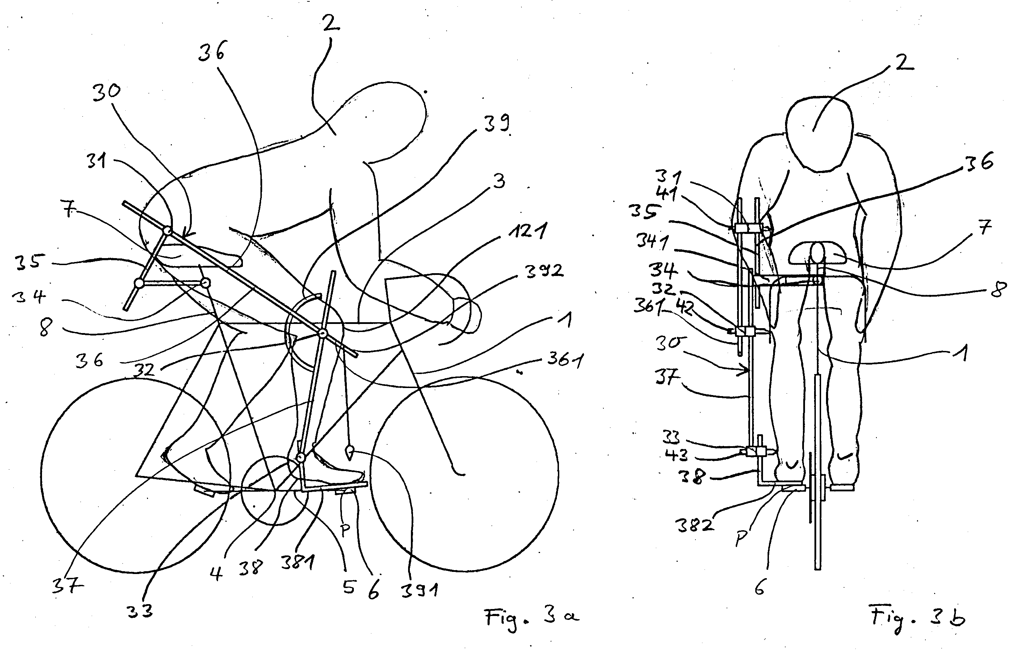

Es soll möglich sein, den jeweiligen Abstand der benachbarten Gelenke (21, 22, 23) stufenlos zu verstellen und diesen Abstand in jeder beliebigen Lage durch eine (nicht gezeichnete) Feststelleinrichtung zu arretieren. Diese Verstellung kann erfolgen, indem mindestens eine dieser Stelleinrichtungen (26, 27) als zwei- oder mehrteilige Teleskopstange ausgeführt ist. Die Verstellung kann in einer weiteren, in Figur 2a angedeuteten Ausführungsform erfolgen, indem mindestens eines der an diese als Stange ausgeführte Stelleinrichtung angrenzenden Gelenke auf dieser Stange längsverschieblich ausgeführt ist. Gemäß Figur 2 ist das Hüftgelenk (21) auf der Oberschenkelstelleinrichtung (26) und das Kniegelenk (22) auf der Unterschenkelstelleinrichtung (27) längsverschieblich angeordnet. Ebensogut könnte das Kniegelenk (22) oder beide Gelenke (21, 22) auf der Oberschenkelstelleinrichtung (26) und das Fußgelenk (23) oder beide Gelenke (22, 23) auf der Unterschenkelstelleinrichtung (27) längsverschieblich angeordnet sein.

Alle Gelenke (21, 22, 23) sind um Drehachsen, die senkrecht zur Zeichenebene ausgerichtet sind, beweglich. Dabei sind Hüft (21) - und Knie (22) - Gelenk als frei drehbare Gelenke ausgelegt, während das Fußgelenk (23) als arretierbares Einstellgelenk ausgelegt ist.

Der Satteladapter (24) kann am Sattel (7) selbst oder, da einfach zu montieren, wie in Figur 2a dargestellt, an der Sattelstütze (8) angeordnet sein. Am Satteladapter (24) muß eine Verstelleinrichtung (25) angeordnet sein, die es ermöglicht, die x- und die y- Positionen des Hüftgelenks (21) in Relation zum Sattel unabhängig zu verstellen. Gemäß Figur 2a geschieht dies, indem am Satteladapter (24) eine Verbindungsstange (25) zum Hüftgelenk (21) angelenkt ist, die einerseits am Adapter (24) um eine Achse senkrecht zur Zeichenebene drehbar und andererseits in Längsrichtung verschiebbar ist.

Das Fußmodell (28) muß so gestaltet sein, daß einerseits der Winkel zwischen Unterschenkelstelleinrichtung (27) und Fußmodell (28) einstellbar ist und andererseits die Entfernung des Pedaladapters (P) vom Fußgelenk entsprechend der Schuhgröße des Radfahrers verstellbar ist. Gemäß Figur 2a wird das Fußmodell (28) vorteilhafterweise als Winkel ausgeführt, so daß der Schenkel (281) in der Ebene der Pedalauftrittsfläche liegt und daß der Pedaladapter (P) auf diesem Schenkel (281) längsverschieblich ist:

In Figur 2a ist beispielhaft die Meßposition nach der oben genannten Einstellregel II dargestellt. Die Einstellung des Fahrrades (1) ist in dieser Meßposition korrekt, wenn an der Skala (29) zur Messung des Kniegelenkwinkels ein Winkel von 165° bis 170° gemessen wird.

Figur 2 b zeigt die selbe Anordnung wie Figur 2a in einer Frontansicht auf das Fahrrad.

Figur 3a zeigt in Seitenansicht eine weitere Ausführung der erfindungsgemäßen Vorrichtung (30), montiert an einem Fahrrad (1). Die Vorrichtung (30) ist so gestaltet, daß sie am Fahrrad (1) montiert sein kann, während der Fahrer (2) in Fahrstellung auf dem Fahrrad (1) sitzt. Der Fahrer (2) kann auch die Pedale (6) bewegen und könnte begrenzt auch bei montierter Vorrichtung (30) radfahren. Letzteres ist aber keine zweckmäßige Verwendung der Vorrichtung (30).

Vorzugsweise wird das Fahrrad (1) in einer Halterung (nicht gezeichnet) in aufrechter Stellung eingespannt. Die Vorrichtung (30) wird am Fahrrad montiert, indem der Satteladapter (34) am Sattel (7) oder an der Sattelstütze (8) und der Pedaladapter (P) am Pedal (6) des Fahrrads festgelegt wird.

Der Fahrer (2), für den die Einstellung erfolgen soll, setzt sich in Fahrstellung auf das eingespannte Fahrrad (1) und dreht die Pedale (6) in Meßposition. In Figur 3a ist beispielhaft die Meßposition nach der oben genannten Einstellregel I dargestellt. Dabei ist zu prüfen, ob sich die Kniespitze (121) des Fahrers lotrecht über dem Pedaladapter (P) befindet. Dies wird mit einem Lot (391) geprüft, das an der Vorrichtung (30) aufgehängt wird. Nach Figur 3a wird die Aufhängung (392) dadurch geschaffen, daß die Oberschenkeleinrichtung (36) über eine Verlängerung (361) der Verbindungsachse Hüft- zu Kniegelenk über das Kniegelenk hinaus verfügt, die sich mindestens bis zur Ebene der Kniespitze (121) hin erstreckt.

Die Vorrichtung (30) ist in wesentlichen Teilen mit der Vorrichtung (20) gemäß Figur 2a/2b identisch. Die wesentlichen Unterscheidungsmerkmale werden insbesondere an Hand der Figur 3b deutlich.

Der Satteladapter (34) verfügt in dieser Ausführungsform über einen Ausleger (341), der sich senkrecht zur Symetrieebene des Fahrrades (1) erstreckt und dessen Länge großer ist als das Maß der halben Beckenbreite des Radfahrers. Dadurch wird das Hüftgelenk (31) einschließlich der Verstelleinrichtung (35) so weit von der Symetrieebene des Fahrrades (1) beabstandet, daß der Oberschenkel des Fahrers (2) zwischen das Fahrrad (1) und die Vorrichtung (30) paßt.

Auch das Fußmodell (38) verfügt über einen Ausleger (382), an dessen dem Fahrrad (1) zugewandten Ende der Pedaladapter (P) befestigt ist.

In der Ausführung gemäß Figur 3a/3b sind vorzugsweise das Hüftgelenk (31), das Kniegelenk (32) und das Fußgelenk (33) jeweils mit einer Justiereinrichtung (41, 42, 43) ausgestattet. Diese Justiereinrichtungen (41, 42, 43) können beispielsweise in Form von Zeigern ausgeführt sein. die genau in der jeweiligen Gelenkachse angeordnet und auch in Richtung der Gelenkachse ausgerichtet sind.

Zur Messung wird vorzugsweise die Projektion der Körpergelenke (11, 12, 13) auf der Körperoberfläche oder der Kleidung beispielsweise durch ein Kreuz gekennzeichnet. Die Vorrichtung (30) wird anschließend so eingestellt, daß die Justiereinrichtungen (41, 42, 43) jeweils genau auf die zugehörigen Körpergelenke (11, 12, 13) ausgerichtet sind.
Günstig ist es, wenn die beispielsweise als Zeiger ausgeführten Justiereinrichtungen (41, 42, 43) in der Länge verstellbar sind, so daß deren Enden jeweils genau auf die Körperoberfläche geführt werden können.

Die Einstellvorrichtung (35) für das Hüftgelenk (31) der Vorrichtung (30) muß so gestaltet und angeordnet sein, daß sie dem Oberschenkel bei jeder Pedalstellung Freiraum bietet. Eine entsprechende, von der Ausführung der Einstellvorrichtung (25) gemäß Figur 2a/2b abweichende Gestaltung ist in Figur 3a/3b dargestellt.

Von den genannten Abweichungen abgesehen, ist die Funktions- und Anwendungsweise der Vorrichtung (30) gemäß Figur 3a/3b identisch mit der Ausführung der Vorrichtung (20) gemäß Figur 2a/2b. Dies gilt insbesondere für die Oberschenkelstelleinrichtung (26; 36), die Unterschenkelstelleinrichtung (27; 37), das Fußmodell (28; 38), das Hüftgelenk (21; 31), das Kniegelenk (22; 32), das Fußgelenk (23; 33), den Pedaladapter (P), den Satteladapter (24; 34), die Skala (29; 39), jeweils mit Ausnahme der oben erwähnten Abweichungen. Auch die Vorrichtung (20) gemäß Figur 2a/2b verfügt über eine Verlängerung (261) der Oberschenkelstelleinrichtung (26) zur Aufnahme einer Aufhängung für ein Lot.

Die Vorrichtung (20) gemäß Figur 2a/2b hat den besonderen Vorteil, daß sie sehr einfach, kompakt und preiswert aufgebaut sein kann.

Die Vorrichtung (30) gemäß Figur 3a/3b ist etwas aufwendiger und muß wegen des weiten Auslegerweges insgesamt steifer ausgeführt sein. Sie kann aber durch die unmittelbare Anpassung auf die Körpermaße des Fahrers (2) besonders präzise eingestellt werden und insbesondere entfällt die vorgeschaltete aufwendige Messung der Oberschenkellänge (LO), der Unterschenkellänge (LU) und der Fußlänge (LF).

## Patentansprüche

1. Vorrichtung (20; 30) zur Einstellung der Sattelhöhe und zur Auswahl der Rahmengeometrie eines Fahrrades (1),
gekennzeichnet durch
- einen Satteladapter (24; 34) , der durch Schnellverschlüsse am Fahrradsattel (7) oder an der Sattelstütze (8) des Fahrrades (1) festlegbar ist,
- eine über ein Hüftgelenk (21; 31) mittelbar oder unmittelbar an diesem Satteladapter (24; 34) befestigte Oberschenkelstelleinrichtung (26; 36),
- eine Unterschenkelstelleinrichtung (27; 37),
- ein Kniegelenk (22; 32), das Oberschenkel (26; 36) - und Unterschenkelstelleinrichtung (27; 37) gelenkig verbindet,
- ein Fußmodell (28, 38), das mit dem vom Kniegelenk (22; 32) beabstandeten Ende der Unterschenkelstelleinrichtung (26; 36) durch ein Fußgelenk (23; 33) gelenkig verbunden ist,
- einen Pedaladapter (P), der an dem Fußmodell (28; 38) befestigt und an einem Pedal (6) des Fahrrades (1) festlegbar ist,
wobei alle Gelenke (21, 22, 23; 31, 32, 33) Bewegungen der Vorrichtung (20; 30) in der selben Ebene erlauben,
wobei die Oberschenkelstelleinrichtung (26; 36) zur Veränderung des Abstandes zwischen Knie- und Hüftgelenk (22; 32 und 21; 31) und die Unterschenkelstelleinrichtung (27; 37) zur Veränderung des Abstandes zwischen Knie- und Fußgelenk (22; 32 und 23; 33) verstellbar ist, und wobei eine Winkelmeßeinrichtung (29; 39) zur Messung des Kniegelenkwinkels vorgesehen ist.

2. Vorrichtung (20; 30) nach Anspruch 1,
dadurch gekennzeichnet,
daß zumindest die Unterschenkel (27; 37) - oder die Oberschenkelstelleinrichtung (26; 36), vorzugsweise aber beide als 2-teilige Teleskopstange oder Teleskoprohr ausgeführt ist, dergestalt, daß die beiden Stangenelemente oder Rohrelemente mittels einer Führungseinrichtung in Richtung ihrer Längsachse gegeneinander verschiebbar sind und daß eine Feststellvorrichtung vorgesehen ist, durch welche die beiden Teleskopelemente in beliebiger Einstellposition gegeneinander fixierbar sind.

3. Vorrichtung (20; 30) nach mindestens einem der Ansprüche 1 und 2,
dadurch gekennzeichnet,
daß die Oberschenkelstelleinrichtung (26; 36) am Hüftgelenk (21; 31) in Richtung der Verbindungsachse zum Kniegelenk (22; 32) verschiebbar ist und daß diese Verschiebbarkeit in beliebiger Einstellposition durch eine Feststelleinrichtung am Hüftgelenk (21; 31) blockiert werden kann.

4. Vorrichtung (20; 30) nach einem oder mehreren der vorgenannten Ansprüche,
dadurch gekennzeichnet,
daß die Oberschenkelstelleinrichtung (26; 36) am Kniegelenk (22; 32) in Richtung der Verbindungsachse zum Hüftgelenk (21; 31) verschiebbar ist und daß diese Verschiebbarkeit in beliebiger Einstellposition durch eine Feststelleinrichtung am Kniegelenk (22; 32) blockiert werden kann.

5. Vorrichtung (20; 30) nach einem oder mehreren der vorgenannten Ansprüche,
dadurch gekennzeichnet,
daß die Unterschenkelstelleinrichtung (27; 37) am Kniegelenk (22; 32) in Richtung der Verbindungsachse zum Fußgelenk (23; 33) verschiebbar ist und daß diese Verschiebbarkeit in beliebiger Einstellposition durch eine Feststelleinrichtung am Kniegelenk (22; 32) blockiert werden kann.

6. Vorrichtung (20; 30) nach einem oder mehreren der vorgenannten Ansprüche,
dadurch gekennzeichnet,
daß die Position des Hüftgelenkes (21; 31) in Bezug auf den Fahrradsattel (7) durch eine Verstelleinrichtung (25; 35) am Satteladapter (24; 34) in Richtung der Sattellängsrichtung verstellt werden kann.

7. Vorrichtung (20; 30) nach einem oder mehreren der vorgenannten Ansprüche,
dadurch gekennzeichnet,
daß die Position des Hüftgelenks (21; 31) in Bezug auf den Fahrradsattel (7) durch eine Verstelleinrichtung (25; 35) am Satteladapter (24; 34) in der Höhe verstellt werden kann.

8. Vorrichtung (20; 30) nach einem oder mehreren der vorgenannten Ansprüche,
dadurch gekennzeichnet,
daß die Position des Pedaladapters (P) am Fußmodell (28; 38) verstellt werden kann, derart, daß die Entfernung des Pedaladapters (P) vom Fußgelenk (23; 33) veränderbar ist.

9. Vorrichtung (20; 30) nach einem oder mehreren der vorgenannten Ansprüche,
dadurch gekennzeichnet,
daß das Hüftgelenk (21; 31) und das Kniegelenk (22; 32) der Vorrichtung (20; 30) zumindest einen ausreichenden Winkelausschlag erlauben, um eine volle Umdrehung der Pedalkurbel (5) nicht zu behindern, wenn der Satteladapter (24; 34) der Vorrichtung (20; 30) am Sattel (7) und der Pedaladapter (P) an einem Pedal (6) festgelegt ist.

10. Vorrichung (20; 30) nach einem oder mehreren der vorgenannten Ansprüche,
dadurch gekennzeichnet,
daß am Fußgelenk (23; 33) eine Skala angebracht ist zur Messung des Fußgelenkwinkels zwischen der Unterschenkeleinrichtung (27; 37) und dem Fußmodell (28; 38).

11. Vorrichtung (20; 30) nach einem oder mehreren der vorgenannten Ansprüche,
dadurch gekennzeichnet,
daß der Winkelausschlag des Fußgelenks (23; 33) in jeder beliebigen Stellung arretierbar ist.

12. Vorrichtung (30) nach einem oder mehreren der vorgenannten Ansprüche,
dadurch gekennzeichnet,
daß der Satteladapter (34) über einen Ausleger (341) verfügt, der sich senkrecht zur vertikalen Mittelebene des Fahrrades (1) erstreckt, der eine größere Länge aufweist als die halbe Beckenbreite des Radfahrers (2) und an dem das Hüftgelenk (31) der Vorrichtung befestigt ist, daß der Pedaladapter (P) durch einen Ausleger (382) mit dem Fußmodell (38) verbunden ist, der sich senkrecht zur vertikalen Längsebene des Fahrrades (1) erstreckt und daß der Satteladapter (34) nicht oder nur minimal über die Sattelebene aufträgt und daß der Pedaladapter (P) nur soweit über das Pedal (6) aufträgt, wie normale, zu dem Pedalsystem passende Schuhadapter.

13. Vorrichtung (30) nach Anspruch 12,
dadurch gekennzeichnet,
daß im Hüftgelenk (31), im Kniegelenk (32) und im Fußgelenk (33) Justiereinrichtungen (41, 42, 43) angeordnet sind, die senkrecht zur vertikalen Symetrieebene des Fahrrads (1) ausgerichtet sind.

14. Verfahren zur Einstellung der Sattelhöhe und zur Auswahl der korrekten Rahmengeometrie eines Fahrrades (1) mittels einer Vorrichtung (20) nach einem oder mehreren der Ansprüche 1 bis 11,
dadurch gekennzeichnet,
daß eine Einstellung der Vorrichtung (20) und Befestigung am Fahrrad (1) derart vorgenommen wird, daß die Hüft (21)-, Knie (22) - und Fußgelenke (23) der Vorrichtung (20) sowie die Krafteinleitungsposition in das Pedal (6) des Fahrrads (1) und die entsprechenden Gelenke (11, 12, 13) und Positionen des Radsportlers (2) jeweils bei Projektion auf die vertikale Mittelebene des Fahrrads (1) in Deckung liegen,
wobei die folgenden Verfahrensschritte zur Anwendung kommen:
a. Festhalten des Fahrrades (1) in vertikaler Fahrstellung oder Befestigung des Fahrrades (1) in vertikaler Stellung in einer Halterung,
b. Messung der Oberschenkellänge (LO) des Radfahrers (2) vom Hüft (11)- zum Kniegelenk (12),
c. Messung der Unterschenkellänge (LU) des Radfahrers (2) vom Kniegelenk (12) bis zum Fußgelenk (13),
d. Messung der Entfernung vom Fußgelenk (13) bis zum Innenballen am Fuß des Radfahrers (2) oder der Entfernung vom Fußgelenk (13) bis zum serienmäßigen Pedaladapter (P) bei Verwendung eines passenden, mit Adapter versehenen Radsportschuhs,
e. Messung der Position des Hüftgelenkes (11) des Radfahrers (2) bei bequemem Sitz auf dem Fahrrad (1) in Fahrstellung hinsichtlich der horizontalen (XH) und vertikalen (YH) Distanz von einem festgelegten Referenzpunkt (BP) am Fahrradsattel (7),
f. Einstellung der Oberschenkelstelleinrichtung (26) derart, daß die Entfernung von Hüft (21) - zu Kniegelenk (22) der Vorrichtung (20) der Oberschenkellänge (LO) des Radfahrers (2) entspricht,
g. Einstellung der Unterschenkelstelleinrichtung (27) derart, daß die Entfernung vom Kniegelenk (22) bis zum Fußgelenk (23) der Unterschenkellänge (LU) des Fahrers (2) entspricht,
h. Einstellung des Pedaladapters (P) am Fußmodell (28) derart, daß die Entfernung vom Fußgelenk (23) bis zum Pedaladapter (P) der gemäß Pkt. d. gemessenen Entfernung entspricht,
i. Befestigung der Vorrichtung (20) am Fahrrad (2) durch Festlegung des Satteladapters (24) am Fahrradsattel (7) oder an der Sattelstütze (8) und durch Festlegung des Pedaladapters (P) am Fahrradpedal (6),
- wobei die Reihenfolge der Maßnahmen a. bis g. austauschbar ist,
k. Einstellung der Position des Hüftgelenks (21) der Vorrichtung (20) nach der zuvor festgestellten Position des Hüftgelenks (11) des Fahrers (2).

15. Verfahren zur Einstellung der Sattelhöhe und zur Auswahl der korrekten Rahmengeometrie eines Fahrrades (1) mittels einer Vorrichtung (30) nach mindestens einem der Ansprüche 12 oder 13,
dadurch gekennzeichnet,
daß eine Einstellung der Vorrichtung (30) und Befestigung am Fahrrad (1) derart vorgenommen wird, daß die Hüft (31)-, Knie (32) - und Fußgelenke (33) der Vorrichtung (30) sowie die Krafteinleitungsposition in das Pedal (6) des Fahrrads (1) und die entsprechenden Gelenke (11, 12, 13) und Positionen des Radsportlers (2) jeweils bei Projektion auf die vertikale Mittelebene des Fahrrads (1) in Deckung liegen,
wobei die folgenden Verfahrensschritte zur Anwendung kommen:
a. stabile Befestigung des Fahrrades (2) in vertikaler Fahrstellung
b. Befestigung der Vorrichtung (30) am Fahrrad (2) durch Festlegung des Satteladapters (34) am Fahrradsattel (7) oder an der Sattelstütze (8) und durch Festlegung des Pedaladapters (P) am Pedal (6),
c. der Fahrradfahrer (2), nach dem die Einstellung vorgenommen werden soll, setzt sich in Fahrstellung auf das Fahrrad (1) und nimmt die bequemste Sitzstellung ein,
d. Einstellung der Verstellvorrichtungen (35) an dem Satteladapter (24) derart, daß in der Projektion auf die vertikale Mittelebene des Fahrrads (1) das Hüftgelenk (31) der Vorrichtung (30) mit dem Hüftgelenk (11) des Fahrers (2) zur Deckung kommt, gegebenenfalls durch Justieren auf das Hüftgelenk (11) des Radfahrers mit der Justiereinrichtung (41) am Hüftgelenk der Vorrichtung (30),
e. Einstellung der Oberschenkelstelleinrichtung (36), der Unterschenkelstelleinrichtung (37), sowie des Pedaladapters (P) derart, daß in der Projektion auf die vertikale Mittelebene des Fahrrads (1) das Kniegelenk (32) der Vorrichtung (30) mit dem Kniegelenk (12) des Radfahrers (2) und das Fußgelenk (33) der Vorrichtung (30) mit dem Fußgelenk (13) des Radfahrers (2) zur Deckung kommt, gegebenenfalls durch Justieren auf das Kniegelenk (12) und das Fußgelenk (13) des Fahrers (2) mit den Justiervorrichtungen (42, 43) am Kniegelenk (32) und am Fußgelenk (33) der Vorrichtung (30).

16. Verfahren zur Einstellung der Sattelhöhe und zur Auswahl der richtigen Rahmengeometrie eines Fahrrades (1) gemäß Anspruch 14 oder 15 mittels einer Vorrichtung (20; 30) nach einem oder mehreren der Ansprüche 1 bis 13,
dadurch gekennzeichnet,
daß nach Durchführung der Verfahrensschritte a bis k gemäß Anspruch 14 beziehungsweise a bis e gemäß Anspruch 15 nacheinander zwei ausgewählte Pedalpositionen eingestellt werden, für die aus biomechanischen Untersuchungen die optimale Körperposition bekannt ist und daß in jeder dieser Pedalpositionen der Kniegelenkwinkel oder die Position des Kniegelenks in Relation zum Pedal festgestellt wird.

17. Verfahren zur Einstellung der Sattelhöhe und zur Auswahl der korrekten Rahmengeometrie eines Fahrrades (1) nach einem der Ansprüche 14 oder 15, sowie 16,
dadurch gekennzeichnet,
daß die Sattelhöhe und die Rahmengeometrie so weit variiert werden, daß in beiden ausgewählten Pedalpositionen die aus biomechanischen Untersuchungen als optimal erkannten Kniegelenkwinkel oder Kniegelenkpositionen bestmöglich erreicht werden.
